# EUROPEAN PATENT SPECIFICATION

(11) **EP 1 951 943 B1**
(45) Date of publication and mention of the grant of the patent: **18.02.2009**
(21) Application number: 06817173.5
(22) Date of filing: 18.10.2006
(51) Int. Cl.: D04H 1/42, D04H 1/46, C09J 7/02, B32B 5/02, B32B 7/14, B32B 15/02, B32B 15/18, B29C 65/00

(54) **ADHESIVE PAD COMPRISING FIBROUS LAYER OF METAL AND POLYMERIC FIBERS**
Klebekissen mit Faserschicht aus Metall- und Kunststofffasern
PATIN ADHESIF COMPRENANT UNE COUCHE FIBREUSE DE FIBRES METALLIQUES ET POLYMERES

(30) Priority: 20.10.2005 GB 0521358
(43) Date of publication of application: 06.08.2008
(73) Proprietor: 3M Innovative Properties Company, St. Paul MN 55133-3427 (US)
(72) Inventor: SIKKEL, Bernardus, J.,, Bracknell Berkshire RG12 8HT (GB); VINCENT, Bernard, F-95006 Cergy Pontoise Cedex (FR); SWAN, Michael, D.,, Saint Paul, Minnesota 55133-3427 (US)
(74) Representative: Voortmans, Gilbert J.L.
(86) International application number: PCT/US2006/040912
(87) International publication number: WO 2007/047855

(56) References cited:
- DE-A1- 2 162 361
- DE-A1- 10 034 112
- DE-A1- 19 821 532
- DE-U- 1 957 410
- US-A- 4 752 415
- US-A- 5 240 645
- US-A1- 2001 044 022
- US-B1- 6 502 289

## Description

The present invention relates to an adhesive pad, in particular an adhesive pad for use in joining metal substrates and/or in reinforcing metal sheets.

Adhesives and sealers used in automotive production are classified as structural, semi-structural and non-structural, depending on their bond strength and elasticity. They are usually homogeneous pastes, liquids or tapes of different gap fill capacity, tensile strength and modulus, which build up strength by a number of different cross-linking chemistries. There is increasing demand for structural and semi structural adhesives in automotive applications. This is because joining with adhesives turns out to be lower cost and more efficient than welding or methods of mechanical fastening. Adhesive bonding is essential for aluminium in vehicles and also for composite or other hybrid constructions.

Structural and semi-structural adhesives are often used to provide additional stiffness, fatigue and impact performance to body components and may be used in bonding stiffeners such as striker pin reinforcements; door handle reinforcements and other types of reinforcement brackets in vehicles where higher strength, stiffness or fatigue properties are required than may be available from other methods of joining such as welding, brazing or riveting for the same substrate thickness.

Adhesives used in the automotive industry should be able to absorb tolerance variations between components during the joining process and to allow movement, such as differential expansion, during oven cycles. Normal joint gaps can vary in size by as much as 2 or 3 mm, and to bridge such a gap without reduction in performance or fluttering of the bonded parts, large quantities of adhesive are often required. In order to limit the cost of the adhesive which is used for gap filling, the respective adhesives are often highly filled. This leads to less than optimised weight and reduced vehicle efficiency.

Environmentally less desirable polymer bases like polyvinyl chloride (PVC) are also frequently used to minimise costs.

To provide gap-filling properties, expanding adhesives have been developed, which incorporate micro-balloons or blowing agents which are heat activated, e.g. during a bake cycle. The problem with this approach is that the multidirectional and uneven expansion of such adhesives is difficult to control. Thus, it is frequently difficult to determine how much adhesive needs to be applied and how the final orientation of the adhesive in the vehicle is going to affect expansion. In addition, the performance of the adhesive, such as its strength or its attachment to a substrate, may be impaired because of its foam construction. Foaming adhesives are often applied as castings or extrusions, kept in place by expensive clips or secondary adhesives and fastenings.

Thus, when using expanding adhesives, it is difficult to provide a sufficient initial flexibility to accommodate variable gaps and, at the same time, optimum physical properties such as an E-modulus of the cured adhesive which gives rise to improved fatigue and crash behaviour due to the possibility of stress distribution. Moreover, adhesives which possess acceptable gap filling properties may not always have sufficient bond strength to the substrates to which they are applied.

A further problem with application of large masses of bulk adhesive in contact with closure panel skins as they are used e.g. in automotive industry is the contraction of the adhesive during curing/polymerisation. As a result, the outline of the adhesive may be discernible as a ghost on the outer skin. Very small contractions can be visible, and the read-through affects vehicle appearance and perceived value. Furthermore, a disadvantage of bulk adhesive for gap filling purposes is that they are cumbersome to apply and generally require special safety requirements to avoid skin contact.

Additionally in the automotive industry, reinforcement sheets are frequently applied to panels of plastic or metal or other substrates for localized, lightweight reinforcement. Typically, such reinforcement may be applied to maintain a certain desired shape of a panel or to avoid denting of panels. Examples of reinforcement sheets have been disclosed in US 4,444,818, US 4,766,183, US 4,842,938, US 4,803,105, US 4,803,108, US 4,900,601, US 4,9298,483, US 5,092,947 and WO 01/947493.

Generally, these reinforcement sheets comprise a layer of a stiffening material and a layer of adhesive, typically an epoxy adhesive, to adhere the reinforcement sheet to a substrate that is to be reinforced. Various configurations and structures have been described for the layer of stiffening material of the reinforcement sheet seeking an appropriate balance between flexibility of the reinforcement sheet during its application such that it can conform to the configuration of the substrate to which it is applied as well as to provide a high degree of stiffness and reinforcement.

Thus, in summary, in particular for applications in the automotive industry, it is thus desirable to provide an adhesive system which combines the initial flexibility required for the filling of variable gaps or conforming to a complex shape with optimum physical properties of the cured/polymerised adhesive system, such as sufficient strength, a suitable E-modulus, fatigue resistance and the ability to disperse impact stresses and/or provide sufficient reinforcement to a substrate. The adhesive system should be convenient to handle and to apply, and it should have a desired bond strength to a variety of surfaces as substrates, such as lubricated surfaces, without requiring their pre-treatment, such as a cleaning or a coating of the surfaces. Finally, the cured adhesive should be compatible with a number of chemical treatments to which the bonded product may be subjected, such as a phosphate wash carried out during paint line processing. Still further, the adhesive system should be easy to apply and compatible with typical automotive manufacturing procedures.

In accordance with an aspect of the present invention there is provided an adhesive pad comprising a fibrous layer comprising a mixture of metal fibers and polymeric fibers, said fibrous layer having a thickness of at least 3 mm and having on at least one of its opposite major surfaces an adhesive layer, said adhesive layer being configured so as to allow electrical contact between said fibrous layer and a metal substrate when such metal substrate is adhered to said adhesive layer. The opposite major surfaces of the fibrous layer of the adhesive pad are generally planar and generally parallel to each other. In a particular embodiment, the adhesive pad is in the form of a sheet, for example rectangular, square, circular or oval or in the form of a web.

It has been found that the adhesive pad can be readily coated by electro-deposition, hereinafter also referred to as e-coating, with a cross-linkable composition. Upon subsequent or simultaneous cross-linking, the fibrous layer can be stiffened such that a desired bond strength of substrates joined by the adhesive pad can be maintained or in case of reinforcement of a metal sheet, the fibrous layer can be sufficiently stiffened to reinforce the metal sheet. Hence, the adhesive pad provides an adhesive system that can be easily applied, in a safe and convenient way with good conformability to complex shapes and/or good gap filling properties while at the same time provide a stiffness or bond strength as required in the particular automotive application.

In a further aspect, the invention provides a method comprising adhering an adhesive pad as defined above to a metal substrate, coating said fibrous layer of said adhesive pad with a cross-linkable composition by electro-deposition and causing said cross-linkable composition to cross-link.

In further aspect, the invention provides an assembly comprising a metal substrate having adhered thereto an adhesive pad as defined above, said adhesive pad being adhered to said metal substrate by said adhesive layer of said adhesive pad.

### Fibrous layer

The fibrous layer of the adhesive pad should have a thickness of at least 3 mm. In a typical embodiment of the present invention, the fibrous layer has a thickness of at least 4 mm, for example at least 5 mm. A practical range may be from 3 to 100 mm, generally from 5 to 50mm. The fibrous layer is typically a non-woven fibrous layer. In an embodiment, the fibrous layer is compacted, e.g. by needle-punching or heat bonding.

Generally, the fibrous layer has a basis weight ranging from 100 g/m² to 1 kg/m². For example, the fibrous layer or web may have a basis weight of 150 g/m² or above, such as 200 g/m² or above or 300 g/m² or above. The desired and optimal basis weight of the fibrous layer will vary depending on the intended application of the adhesive pad and can be readily determined by routine experimentation.

The fibrous layer of the adhesive pad comprises a mixture of metal fibers and polymeric fibers. The amount of metal fibers in the fibrous layer may vary widely but is generally at least 5% by weight based on the total weight of fibers. When a too low amount of metal fibers is present in the fibrous layer, the fibrous layer may not be sufficiently coatable in an e-coating process. The maximum amount of metal fibers is generally not very critical although for ease of handling and economic reasons, the amount of metal fibers will generally not be more than 90% by weight of the total weight of fibers in the fibrous layer. A practical range for the amount of metal fibers is for example from 10 to 60% by weight based on the total fiber weight in the fibrous layer. In another embodiment, the amount of metal fibers may be from 20 to 50% by weight or from 25 to 45% by weight based on the total fiber weight in the fibrous layer.

Metal fibers for use in the fibrous layer of the adhesive pad are preferably selected so as to avoid corrosion problems when the adhesive pad is adhered to a metal substrate. According to a particular embodiment, the metal fibers include steel fibers, and in particular stainless steel fibers. Generally the metal fibers have a diameter between 4 and 50 microns, with a typical range being 8 to 22 microns. The length of the metal fibers is generally between 20 and 120 mm with a typical range being between 40 and 9.0 mm. The cross-section of the metal fibers can have any shape including circular, ellipse, rectangular and square. When the cross-section has a shape other than circular, the term 'diameter' should be understood to mean the size of the largest dimension of the cross-section.

The type of polymeric fibers to be used in the fibrous layer may vary widely and include staple fibers. Typical examples are polyolefin fibers such as polyethylene, or polypropylene, polystyrene fibers, polyether fibers, polyester fibers such as polyethylene terephthalate (PET) or polybutaline terephthalate (PBT) fibers, vinyl polymer fibers such as polyvinyl chloride and polyvinylidene fluoride, polyamides such as polycaprolactam, polyurethanes, nylon fibers, polyaramide fibers (such as Kevlar® fibers). Preferred examples are PET fibers and polyaramide fibers. Also, blends of two or more of the above types of fibers may be used to provide fibrous layers in the adhesive articles of the invention. The above mentioned fibers may be blended with thermal bond fibers, using amounts of the thermal bond fibers of 10 % by weight or more, such as 15 % by weight, based on the total amount of fibers in the fibrous layer. Thermal bond fibers are known in the art, and include bicomponent fibers (also known as Bico fibers). The thermal bond fibers may be used to give further strength to the fibrous layer. Generally, 30 % by weight or less or 20 % by weight or less of the thermal bond fibers are sufficient to provide additional integrity to the fibrous layer.

Generally, the polymeric fibers of the fibrous layer have a diameter of at least 1 denier (den). Preferred are values of not less than 5 den, such as 10 den or above or 15 den or above. Preferably, the polymeric fibers should have a diameter of not more than 100 den, for example 50 den or less.

According to a method for making the fibrous layer, a mixture of polymeric and metal fibers is fed into a conventional web-forming machine (commercially available, for example, under the trade designation "RANDO WEBBER" from Rando Machine Corp. of Macedon, N.Y.; or "DAN WEB" from ScanWeb Co. of Denmark), wherein the fibers are drawn onto a wire screen or mesh belt (e.g., a metal or nylon belt). To facilitate ease of handling of the fibrous layer, the fibrous layer can be formed on or placed on a scrim. Depending upon the length of the fibers, the resulting fibrous layer typically has sufficient handling strength to be transferred to a needle punch machine without the need for a support (e.g., a scrim). The fibrous layer can also be made using conventional wet-forming or textile carding. It will generally be preferred to compress the fibrous layer by for example needle punching the fibrous layer.

In a particular embodiment, the fibrous layer is a needle-punched fibrous non-woven layer. A needle-punched fibrous non-woven layer refers to a fibrous layer wherein there is physical entanglement of fibers provided by multiple full or partial (preferably, full) penetration of the layer, for example, by barbed needles. The fibrous layer can be needle punched using a conventional needle punching apparatus (e.g., a needle puncher commercially available under the trade designation "DILO" from Dilo of Germany, with barbed needles (commercially available, for example, from Foster Needle Company, Inc., of Manitowoc, Wis.)) to provide a needle-punched, non-woven fibrous layer. Needle punching, which provides entanglement of the fibers, typically involves compressing the fibrous layer and then punching and drawing barbed needles through the mat. The optimum number of needle punches per area of mat will vary depending on the particular application of the adhesive pad. It has been found that the electrical properties of the adhesive pad can be optimized for e-coating by adjusting the needle-punch density. In accordance with one embodiment, the needle punch density is at least about 50 needle punches per square centimeter, for example at least 100 needle punches per square centimeter. A particular range may be from 150 needle punches to 400 needle punches per square centimeter.

Alternatively the fibrous layer can be stitchbonded using conventional techniques (see e.g., U.S. Pat. No. 4,181,514 (Lefkowitz et al.), the disclosure of which is incorporated herein by reference for its teaching of stitchbonding nonwoven mats). Typically, the fibrous layer is stitchbonded with organic thread. A thin layer of an organic or inorganic sheet material can be placed on either or both sides of the fibrous layer during stitchbonding to prevent or minimize the threads from cutting through the fibrous layer. An inorganic thread, such as ceramic or metal (e.g., stainless steel) can be used as well.

According to a still further embodiment, the fibrous layer contains thermal bond fibers and may be compacted or densified by heating the fibrous layer thereby causing the thermal bond fibers to bond.

According to a particular embodiment the fibrous layer is a vertically cross lapped non-woven fibrous layer. Vertical cross lapping yields a corrugated non-woven fibrous layer by vertically folding a carded fibrous layer. The carded fibrous layer in one embodiment may be cross-lapped and then vertically folded. In a vertically cross lapped fibrous layer, the fibers which are initially oriented in the x,y-direction in the carded web used as a starting product in the VCL process, are oriented towards the z-direction (or the thickness direction) of the fibrous layer resulting from the process. Thermal bond fibers may be used to help to stabilize the corrugated structure of the vertically cross lapped web. These thermal bond fibers may be activated after the lapping process, e.g. by passing the web through a thermal bond oven. Suitable techniques of vertical cross lapping are established in the art, and the equipment necessary to obtain a VCL web is available under the trade name "Struto" or "Wavemaker". Such techniques are also disclosed in US 6,602,581 and literature cited therein.

### Adhesive layer

The adhesive layer of the adhesive pad may be engaged with fibers of the non-woven fibrous layer. Generally, the adhesive layer should, along its thickness, not be completed penetrated or immersed with fibers of the non-woven fibrous composition as such may negatively impact the capability of providing good adherence to a substrate. According to a particular embodiment, the thickness of the part of the adhesive layer that is not penetrated with fibers of the non-woven fibrous layer is between 0 and 95%, for example between 20 and 60%.

The thickness of the adhesive layer is typically between 20 and 500 microns, for example between 50 and 200 microns. In accordance with the present invention, the adhesive layer should be configured in such a way that electrical contact between a metal substrate and the fibrous layer of the pad is possible when a metal substrate is adhered to the pad by means of the adhesive. Such electrical contact may be provided by configuring the adhesive layer as a conductive adhesive layer, i.e. by providing conductive fillers in the adhesive composition such as for example carbon particles, carbon fibers or metal particles. In a typical embodiment, the adhesive layer is provided in a discontinuous way so as to leave a certain part of the surface of the fibrous layer free of adhesive. Typically, this may be achieved by providing the adhesive layer in a pattern-wise coating of for example spots or stripes. If the adhesive layer is configured in a discontinuous way, the amount of surface of the fibrous layer covered with adhesive will vary between about 40 and 99% of the surface, typically between 60 and 95%. Still further, the adhesive layer may be configured such that at particular places, the fibrous layer or at least the metal fibers in the fibrous layer penetrate through the adhesive layer. These places or points may then serve as points of electrical contact.
The adhesive layer of the adhesive pad may comprise a pressure sensitive adhesive as well as an activatable adhesive including a cross-linkable adhesive and heat activatable or hot melt adhesive. Further, the adhesive layer may comprise a mixture of pressure sensitive adhesive and activatable adhesive or an activatable adhesive having pressure sensitive adhesive characteristics can be used as well. In a particular embodiment in connection with the present invention, the adhesive layer may comprise separate domains of a pressure sensitive adhesive and an activatable adhesive composition.

The term 'activatable adhesive composition', as it is used in the context of the present invention, refers to an adhesive composition that requires activation to form a bond, in particular a permanent bond. By 'activation' is meant that the adhesive composition is exposed to heat or is irradiated with, for example UV, visible light or e-beam to cause the bond to form. In one embodiment, a structural bond may be formed that has a shear strength of at least 0.2 MPa, for example at least 2 MPa, typically at least 6.9 MPa measured according to ASTM D-1002-94. The structural bond preferably has a T- peel strength of at least 50N/25mm, more preferably at least 100N/25mm when tested according to the methods outlined under ASTM D 1876. The activatable adhesive composition may or may not have pressure sensitive adhesive properties, and, when present, these may not be retained through a typical activation cycle used in forming a permanent or structural bond. Exemplary activatable adhesive composition having pressure sensitive properties which may also be used for the adhesive articles of the present invention are disclosed in US 5,086,088 and in WO 92/20754.

Upon activation, an activatable adhesive composition may cross-link or cure, i.e. a so-called thermosetting adhesive, or the adhesive composition may melt, thereby wetting out the surface and forming a bond upon cooling. Still further, the activatable adhesive composition may be comprised of a so-called hybrid material as defined below.

The term "thermosetting" as used herein refers to a material, which undergoes a curing reaction that results in a chemical change upon bonding and an increase in the hardness of the material. The term "thermoset" as used herein refers to a thermosetting material, which has been cured. A thermosetting material may generally be bonded by application of heat, actinic radiation such as UV, visible, or infrared, or microwave or X-ray energy.

The term "thermoplastic" as used herein refers to a material which undergoes a physical change upon the application of heat, i.e., the material flows upon bonding and returns to its initial non-flowing state upon cooling. A thermoplastic material is typically bonded by application of heat.

The term "hybrid material" refers to a material which is a combination of at least two components, wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A hybrid material will be described in more detail below. A hybrid material may generally be bonded by application of heat, actinic radiation such as UV, visible, or infrared, or microwave or X-ray energy.

A hybrid material is, for the purpose of the present invention, mutually exclusive of the classes of thermosetting and thermoplastic materials defined herein. In other words, thermosetting materials and any optional additives or thermoplastic materials and any optional additives will be considered non-hybrid materials if they do not meet the definition of hybrid material as defined herein.

Exemplary activatable compositions for use in the present invention are those referred to as adhesive material in US 2002/0182955 A1, the curable compositions of US 6,057,382 or those listed in the following.

Suitable thermosetting materials include epoxides, urethanes, cyanate esters, bismaleimides, phenolics, including nitrile phenolics, and any combinations thereof.

Suitable epoxides include those containing at least two 1,2-cyclic ethers. Such compounds can be saturated or unsaturated, aliphatic, aromatic or heterocyclic, or can comprise combinations thereof. Suitable epoxides may be solid or liquid at room temperature.

Compounds containing at least two epoxide groups (i.e., polyepoxides) are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C. A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A- or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Preferred aromatic polyepoxides are the polyglycidyl ethers of polyhydric phenols, such as the series of diglycidyl ethers of Bisphenol-A commercially available from Shell Chemical Inc., Houston, Tex., for example, under the trade designations "EPON 828" and "EPON 1001 F" and the series of diglycidyl ethers of Bisphenol-A and Bisphenol F and their blends commercially available from Shell Chemical Inc., for example, under the trade designations "Epikote 232" and "Epikote 1001" available from Shell Chemical Inc., Pernis, The Netherlands. Other useful commercially available aromatic epoxides include the "DER" series of Bisphenol epoxides, and "DEN" series of epoxy novolak resins available from Dow Chemical, Midland, Mich., diglycidyl ether of fluorene Bisphenol, available from Shell Chemical Inc., Houston, Tex., under the trade designation "EPON HPT Resin 1079", a triglycidyl derivative of p-aminophenol commercially available from Ciba Performance Polymers, Brewster, N.Y. under the trade designation "MY 0500", a tetraglycidyl derivative of methylene dianiline commercially available from Ciba Performance Polymers, Brewster, N.Y. under the trade designation "MY 720". Flame retardant epoxides may also be used, for example, the flame retardant brominated Bisphenol-A diglycidyl ether commercially available from Dow Chemical, Midland, Mich., under the trade designation "DER 580". The term "derivative" as used herein with reference to thermosetting materials refers to a base molecule with additional substituents that do not interfere with the thermosetting bonding of the base molecule.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Union Carbide Corp., Danbury, Conn., under the trade designation "ERL", such as vinyl cyclohexene dioxide ("ERL-4206"), 3,4-epoxycyclohexylmethyl-3,4-epoxycyclohexane carboxylate ("ERL-4221"), 3,4-epoxy-6-methylcyclohexylmethyl-3,4-epoxy-6-methylcyclohexane carboxylate ("ERL-4201"), bis(3,4-epoxy-6-methylcycylohexylmethyl)adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy)butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pa. or "Poly bd" from Elf Atochem, Philadelphia, Pa.), epoxidized aliphatic polyurethanes, and epoxy silicones, e.g., dimethylsiloxanes having cycloaliphatic epoxide or glycidyl ether groups.

Examples of suitable epoxide-based bondable layers that are commercially available in film form include those available from Minnesota Mining and Manufacturing Company ("3M"), St. Paul, Minn. under the trade designation "3M Scotch-Weld Structural Adhesive Film" including those having the following "AF" designations: "AF 42", "AF 111 ", "AF 126-2", "AF 163-2", "AF 3109-2", "AF 191", "AF 2635", "AF 3002", "AF 3024", and "AF 3030FST".

In one embodiment, a thermosetting activatable adhesive comprises a fusible epoxide prepolymer (which can melt and flow unlike a B stage resin) which is a solid at room temperature and, more preferably, further comprises a second epoxide component which may be solid or liquid at room temperature. Suitable solid fusible epoxide prepolymers include those described above which are a solid at room temperature.

An exemplary activatable adhesive composition may comprise a solid fusible epoxide prepolymer comprising a diglycidyl ether of Bisphenol A alone or in combination with a diglycidyl ether of Bisphenol A or Bisphenol F or a blend thereof. The activatable adhesive composition is a solid at room temperature after the addition of any optional components, more preferably the epoxide material (comprising single or multiple epoxides) is a solid at room temperatures.

A thermosetting composition typically comprises a thermosetting material and a curative or curatives. The term "curative" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 80° C.), or react at lower temperatures only after an activation step such as exposure to actinic radiation. This allows the adhesive, composition to be readily mixed and coated at room temperature (about 23 ± 3° C.) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids; and phenolic materials as described above. Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methyl-butane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, Pa., under the trade designations, "Amicure CG-1200", "AMICURE CG-1400", "Ancamine 2337", "Ancamine 2441", "Ancamine 2014"; and those from Asahi Denka Kogyo K. K. Tokyo, Japan, under the trade designations "Ancamine 4338S" and "Ancamine 4339S"; those from CVC Specialty Chemicals, Mapleshade, N.J., under the trade designations "Omicure U-52" and "Omicure U-410" as well as the other materials in the "Omicure" series; those from Landec, Menlo Park, Calif., under the trade designations "Intellimer 7001 ", "Intellimer 7002", "Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, N.J., as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material.. Representative blocked Lewis acids include BF₃ -monoethylamine, and the adducts of HSbF₅ X, in which X is halogen, --OH, or --OR¹ in which R¹ is the residue of an aliphatic or aromatic alcohol, aniline, or a derivative thereof, as described in U.S. Pat. No. 4,503,211, incorporated herein by reference.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Pat. No. 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. Still other cationic photocatalysts include an ionic salt of an organometallic complex in which the metal is selected from the elements of Periodic Group IVB, V 13, VIB, V1113 and VIIIB which is described in European Patent Application 109,581. A suitable photochemically activated curative is a curative commercially available from Ciba-Geigy, Hawthorne, N.Y. under the trade designation "Irgacure 261".

In an alternative embodiment, the activatable adhesive composition may be based on a thermoplastic material. Suitable thermoplastic materials include, for example, polyesters, ethylene vinyl acetate (EVA), polyurethanes, polyamides, polyolefins, and derivatives thereof. The term "derivative" as used herein with reference to thermoplastic materials refers to a base molecule with additional substituents that are not reactive towards a crosslinking or polymerization reaction. Thermoplastic materials, by nature, typically do not require curatives.

A hybrid material, as a further embodiment of the activatable adhesive composition, is a combination of at least two components wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A first component is a crosslinkable material and a second component is (a) a thermoplastic material, (b) monomers, oligomers, or polymers (and any required curative) which can form a thermoplastic material, (c) a thermosetting material, i.e., monomers, oligomers, or prepolymers (and any required curative) which can form a thermosetting material. The second component is chosen so that it is not reactive with the first component. It may be desirable, however, to add a third component which may be reactive with either or both of the crosslinkable material and second component for the purpose of, for example, increasing the cohesive strength of the bonded hybrid material.

Suitable first components include thermosetting materials, for example, the thermosetting materials described above, as well as crosslinkable elastomers such as acrylics and urethanes as described above.

Suitable thermoplastic second components include those thermoplastic materials described above. Suitable thermoplastics which can be formed in situ, i.e., with monomers, oligomers, or polymers (and any required curative) which can form a thermoplastic material without undergoing any significant crosslinking reaction would be readily apparent to one skilled in the art. Exemplary hybrid materials incorporating a second component (a) are described, for example, in WO 00/20526; U.S. Pat. No. 5,709,948, and U.S. Pat. No. 6,057,382, all of which are incorporated herein by reference. Exemplary hybrid materials incorporating a second component (b) are described, for example, in U.S. Pat. No. 5,086,088, which is incorporated herein by reference. Example 1 of U.S. Pat. No. 5,086,088 illustrates an example of a thermoplastic material formed in situ.

Suitable thermosetting second components include those thermosetting materials described above. Exemplary hybrid materials incorporating a second component (c) are described, for example, in U.S. Pat. No. 5,494,981, which are incorporated herein by reference.

An exemplary activatable adhesive composition is an epoxy based composition as disclosed in US 6,506,494.

In a typical embodiment, the adhesive pad comprises an adhesive layer having a pressure sensitive adhesive. In a particular embodiment, the pressure sensitive adhesive is an acrylic based pressure sensitive adhesive, but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D. Satas, Ed. Satas and Associates, Warwick RI/USA, 1989 on pages 550-556 and 423-442 respectively.

Particular examples of suitable pressure sensitive adhesives include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylene-propylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

In a particular embodiment, the pressure sensitive adhesive is particularly suitable for bonding to oily surfaces. Pressure sensitive adhesives that may be used to bond to substrates having a low surface energy or oily surfaces, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precursor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesive that may be particularly useful for adhesion to an oily surface are disclosed in WO 95/13331.

The adhesive pad may have an adhesive layer provided on only one surface of the fibrous layer or an adhesive layer may be provided on both opposite major surfaces of the fibrous layer. If only one surface is provided with an adhesive layer, the adhesive pad may find particular utility as a reinforcement pad for a metal sheet. Adhesive pads with adhesive layers on both surfaces of the fibrous layers may be used to bond two substrates together and are particularly useful in gap fill applications. When the adhesive pad has adhesive layers on both sides, one or both may be configured so as to allow electrical contact between a metal substrate and the fibrous layer. Also, if adhesive layers are provided on both sides, they may be of the same or a different composition. For example, one of the adhesive layers may be a pressure sensitive adhesive layer whereas the other may be an activatable adhesive.

### Method of bonding the adhesive pad to a substrate

In accordance with a particular embodiment of the present invention, the adhesive pad is bonded to a metal substrate by adhering the adhesive layer to the metal substrate. Because the adhesive layer is configured in such a way as to allow electrical contact between the fibrous layer and the metal substrate, the fibrous layer can be provided with a cross-linkable composition through an e-coating process. In particular, the fibrous layer can be provided with a cross-linkable composition using e-coating processes and compositions typically used in the coating of parts of an automotive vehicle such as a car, bus, truck, van etc... Subsequently the cross-linkable composition provided in the fibrous layer is caused to cross-link, typically by heating an assembly of the metal substrate and adhesive pad to an elevated temperature of for example 120 to 250°C, typically between 160 °C and 200°C. Following cross-linking the fibrous layer will have stiffened to a desired stiffness such that the adhesive pad may provide a strong bond between two substrates if the adhesive pad is used to bond to components together or the stiffness of the fibrous layer can cause a reinforcement of the substrate to which the adhesive pad has been bonded.

To e-coat the assembly of the adhesive pad adhered to the metal substrate, the assembly is dipped in a bath containing the coating composition, i.e. the cross-linkable composition that is to be applied to the fibrous layer of the adhesive pad. Electrical current is applied between electrodes in the bath by which one of the electrodes is formed by the assembly to be coated. The assembly may either form the cathode or the anode. Generally however the assembly will form the cathode and the e-coating is then a so-called cathodic electrodeposition.

Typically, the coating composition for e-coating will contain water, optionally an organic solvent, one or more resins and optionally one or more pigments. The resin can be a cross-linkable resin or a separate cross-linking agent may be added that can cause cross-linking of the resin. In a particular embodiment, the e-coating composition comprises (a) a polymeric binder in an amount of 5 to 95% by weight based on non-volatiles, for example between 20 and 85% by weight or 50 to 75% by weight, (b) a cross-linking agent in an amount of 5 to 90% by weight of non-volatiles, for example 15% to 60% by weight or 25 to 45% by weight, (c) water and (d) optionally an organic solvent for example in an amount of upto 10% by weight of the composition.

Examples of binders for use in the e-coating composition include epoxy resins, polyurethanes, alkyd resins, polyester resins and acrylic polymers. In a particular embodiment, the binder includes one or more non-ionic groups, one or more saltable sites and/or one or more precursors of saltable sites. Examples of suitable binders are for example disclosed in US 2003096905 and include for example amine-modified epoxy resins that may be obtained by reacting a polyepoxide compound with a primary amine, secondary amine or tertiary amine. Further amino-epoxide resins that can be used include those disclosed in EP1156085. Examples of cross-linking agents that can be used in the e-coating composition include for example blocked polyisocyanates, polyepoxides, aminoplast resins and cross-linking agents that have multiple unsaturated groups such as for example terminal double bonds.

Prior to e-coating, the assembly of adhesive pad and metal substrate(s) may be subjected to pre-treatments that are typically used in the paint industry to apply paint by e-coating. Such pretreatment may include cleaning, rinsing, conditioning, conversion coating e.g. phosphating, rinsing, post-treatment and rinsing with deionized water. Details about such pretreatments can be found in "Electrocoating, A Guidebook for Finishers", The electrocoat association, fifth edition.

### Utility of the invention

In a particular embodiment of the present invention, the adhesive pad may be used to reinforce a metal sheet for example so as to maintain that sheet in a desired shape. In this aspect, the invention offers the advantage that the adhesive pad can be easily applied to the metal sheet and in particular can conform to the shape thereof very easily. Additionally, the operator will generally not have to be exposed to cross-linking compositions or the like. Upon e-coating and curing, the fibrous layer of the adhesive pad will have stiffened sufficiently to as to reinforce and hold the metal sheet in a desired shape.

Alternatively, the adhesive pad may be used to bond two components together, at least one of which should be a metal substrate. In this aspect, the adhesive pad may be used to allow for easy, convenient and cost effective gap filling while providing a strong, for example structural bond, between the two components. Moreover, the fibrous layer of the adhesive pad may provide stress distribution properties in the bond between the two components which should offer advantages when the components are part of an automotive vehicle in a crash of such vehicle.

### EXAMPLES

### Materials used

### Acrylic Adhesive A

Acrylic adhesive A is an acrylic pressure sensitive adhesive (PSA) transfer tape commercially available from the 3M company (St.Paul, MN/USA) as 9471FL, having a thickness of 0,051 mm.

### Fibres

### Stainless steel fibers

12 micron stainless steel fiber from R.Stat company, France 69120 Vaulx en Velin

### Polyamide fibers

Technical Fibers Polyamide 6.6 title 1.6 dtex, length 40mm from Rhodia (Neumuenster Germany)
The fibrous webs were all made using carding processes.

### e-coat primer

Powercron^{R} 645, cathodic epoxy e-coat primer from PPG Industries (UK) Ltd.

### Test Methods

### 3-Point Bend Test

The test assembly cured as set out in the examples was placed upon 4 aluminium trestles having a height of 30 mm and a width of 64 mm. These supports were placed 100mm apart thus leaving a 100mm span between trestles. The test pad side was hereby positioned on top of the trestles, the steel side facing upwards. The test was then commenced by pushing down the central portion of the panel, which is a 6.4 mm radius bar at right angles to the long axis of the panel and centrally placed between the supports. At a compression rate of 5mm per minute, the force (N) to deflect the steel plate was measured using normal tensometry.

### Example 1

### Non-woven

For manufacturing of the fibrous web, batches of 2 to 5 kg of the fiber blend comprising of 20 weight % of stainless steel fibers and 80 weight % polyamide fibers (based on 100% fibers) were mixed by hand The fibers were run through a LAROCHE^{R} Opening/mixing machine. This is a teasing operation where fibers are pulled apart and mixed by rotating combs. The stainless steel plus polyamide stock fibers were placed on an inlet conveyor belt (speed in 1 m/min, middle speed 2 rpm, speed out 2 rpm) leading to the combing operation and the pulled fiber mix was blown into a large cardboard box. (air laid card RANDO^{™} webber) to form the fiber web. The following process parameters were used: lickerin 1200 rpm, depression feeder 7.5 psi, depression webber 7 psi, elevator speed 300 rpm, stripper speed 350 rpm, feed roll speed 1.1 rpm, high lid 30 mm, speed line 1 m/min. Then the formed web was conveyed to a needle tacker. The needle tacker allowed to mechanically bond the web and to increase density by the actions of needle through the web. The needle type for all examples was Foster 15x18x25x3.5 RBF 209. Speed in and out was 1 m/min, needle density 10000 needles/m², top board graduation 20, bottom board graduation 12 and the penetration was 22 mm. These process parameters were used to obtain a product with a density of 300 punches per cm² and a rando of 400 g/m² .

### Application of pressure-sensitive adhesive to non-woven

A 152 mm x 200 mm fibrous web obtained as described previously and having a thickness of 3 to 5 mm was covered with acrylic adhesive A using the following procedure:
The adhesive was cut into 15mm x 200mm strips; 5 strips were evenly spaced in parallel strips on the non-woven pad (152 x 200 mm) in order to achieve approximately 50% coverage. Thus electrical contact between the surface of the metal and the surface of the non-woven pad was achieved. Each strip was rolled once with a 2kg roller, then the pad was placed for 2h in an oven at 70°C in order to achieve full wet out of the pressure sensitive adhesive on the non-woven fibres. Samples were cooled then stored at room temperature.

### Bonding of non-woven plus adhesive to metal plate followed by e-coating step

Samples were bonded to the 25mm x 200mm x 0.8mm hot dip galvanised steel specimens (60G60GHD National Steel Corporation; Livonia USA) for subsequent testing according to the 3-point bend method. The surface of the plate was pre-coated with Quaker FCT 6130 to a coating weight of 2 grams per m² obtained from Quaker Chemical BV Protection and metal Forming Department, Uithoorn, Netherlands. Then the release liner was removed from the adhesive before application of the non-woven pad to the above described substrate. Once applied to the metal surface the pad was again rolled once with a 2kg roller. Adhesion to the oily metal surface was sufficient to hold the pad in place immediately but continued to build up to maximum RT strength after approximately 24h. For the E-coating step the sample was treated with appropriate automotive degreasing, washing and phosphating processes as typically used in car plants followed by treatment with Powercron ^{R} 654 (from PPG) cathodic electrocoat (lead free) primer. The process bake schedule was minimum 180° C for 10 minutes metal temperature, maximum 204° C for 30 minutes metal temperature.
After the test assembly removal from the oven the curing cycle of example 1 was seen as completed. The thus obtained sample was tested in the 3 point-bend-test as described above.

### Example 2

A non-woven was made as in example 1 with the following exceptions:
50 weight% of stainless steel fibers and 50 weight% polyamide fibers were mixed. The following process parameters were set during the rando step: elevator speed 200 rpm, stripper speed 250 rpm, feed roll speed 0.5 rpm. These process parameters were used to obtain a product with a density of 200 punches per cm² and a tacking of 300 g/m²

### Example 3

A non-woven was made as in example 1 with the following exceptions:
80 weight % of stainless steel fibers and 20 weight% polyamide fibers were mixed. The following process parameters were set during the rando step: elevator speed 300 rpm, stripper speed 350rpm, feed roll speed 1.1 rpm. These process parameters were used to obtain a product with a density of 400 punches per cm² and a tacking of 100 g/m².

### Comparative example 1

A non-woven was made as in example 1 with the following exceptions:
20 weight% of stainless steel fibers and 80% polyamide fibers were mixed. The following process parameters were changed during the rando step: elevator speed 200 rpm, stripper speed 250rpm, feed roll speed 0.85 rpm. These process parameters were used to obtain a product with a density of 300 punches per cm² and a tacking of 200 g/m².
This non-woven was laminated with the acrylic adhesive A like in example 1 but with full coverage of the non-woven. The adhesive pad could not be coated with the E-coating as there was no electrical contact between the fibrous layer and the metal substrate.

### Comparative example 2 (stainless steel plate without non-woven)

The plain stainless steel Q-panel that has been used in the 3 point-bend-testing as a substrate was now tested under the same conditions but without lamination of the above mentioned composition.

### Test Results

The test assemblies prepared in examples 1 and 2 were subjected to a 3-point bend test.

**Table 1: nature of non-woven web, coverage of adhesive**

| **Example** | **% metal fibers** | **% PA fibers** | **Tacking (g/m²)** | **Density (punch/cm²)** | **% Coverage of adhesive** |
|---|---|---|---|---|---|
| 1 | 20 | 80 | 400 | 300 | 50 |
| 2 | 50 | 50 | 300 | 200 | 50 |
| 3 | 80 | 20 | 400 | 100 | 50 |
| Comp. 1 | 20 | 80 | 200 | 300 | 100 |

**Table 2: test results showing load (N) of all examples for 3 point-bend test related to deflection (mm)**

| Example | 0mm | 1mm | 2mm | 3mm | 4mm | 5mm | 10mm | 15mm |
|---|---|---|---|---|---|---|---|---|
| 1 | 0 | 18 | 30 | 50 | 70 | 85 | 120 | 135 |
| 2 | 0 | 20 | 55 | 80 | 92 | 102 | 110 | 115 |
| 3 | 0 | 15 | 25 | 42 | 50 | 48 | 50 | 52 |
| Comp.1 | 0 | 5 | 10 | 15 | 20 | 22 | 35 | 42 |
| Comp.2 | 0 | 10 | 18 | 20 | 22 | 25 | 35 | 38 |

## Claims

1. Adhesive pad comprising a fibrous layer comprising a mixture of metal fibers and polymeric fibers, said fibrous layer having a thickness of at least 3 mm and having on at least one of its opposite major surfaces an adhesive layer, said adhesive layer being configured so as to allow electrical contact between said fibrous layer and a metal substrate when such metal substrate is adhered to said adhesive layer.

2. Adhesive pad according to claim 1 wherein an adhesive layer is provided on both opposite major surfaces of said fibrous layer and wherein each of said adhesive layers is configured so as to allow electrical contact between said fibrous layer and a metal substrate when such metal substrate is adhered to said adhesive layer.

3. Adhesive pad according to claim 1 or claim 2 wherein said adhesive layer comprises a pressure sensitive adhesive composition.

4. Adhesive pad according to any of claims 1 to 3 wherein said adhesive layer is provided such that part of the surface of said fibrous layer are substantially free of adhesive.

5. Adhesive pad according to claim 4 wherein said adhesive layer is provided in a discontinuous pattern on said fibrous layer.

6. Adhesive pad according to any of the previous claims wherein said adhesive layer comprises an adhesive composition having conductive particles.

7. Adhesive pad according to any of the previous claims wherein said fibrous layer is a non-woven layer.

8. Adhesive pad according to claim 7 wherein said fibrous layer is needle-punched or heat bonded.

9. Assembly comprising a metal substrate having adhered thereto an adhesive pad as defined in any of claims 1 to 8, said adhesive pad being adhered to said metal substrate by said adhesive layer of said adhesive pad.

10. Method comprising adhering an adhesive pad as defined in any of claims 1 to 8 to a metal substrate, coating said fibrous layer of said adhesive pad with a cross-linkable composition by electro-deposition and causing said cross-linkable composition to cross-link.

11. Method according to claim 10 wherein said cross-linkable composition comprises an epoxy compound.

12. Method according to claim 10 or 11 wherein said cross-linkable composition is caused to cross-link by subjecting the cross-linkable composition to an elevated temperature of at least 100°C.

## Patentansprüche

1. Klebekissen mit einer Faserschicht mit einer Mischung aus Metallfasern und Kunststofffasern, wobei die Faserschicht eine Dicke von mindestens 3 mm aufweist und auf mindestens einer ihrer gegenüberliegenden Hauptflächen eine Klebeschicht aufweist, wobei die Klebeschicht derart konfiguriert ist, dass ein elektrischer Kontakt zwischen der Faserschicht und einem Metallsubstrat gestattet ist, wenn ein solches Metallsubstrat an der Klebeschicht angeklebt ist.

2. Klebekissen nach Anspruch 1, wobei eine Klebeschicht auf beiden gegenüberliegenden Hauptflächen der Faserschicht vorgesehen ist und wobei jede der Klebeschichten derart konfiguriert ist, dass ein elektrischer Kontakt zwischen der Faserschicht und einem Metallsubstrat gestattet ist, wenn ein solches Metallsubstrat an der Klebeschicht angeklebt ist.

3. Klebekissen nach Anspruch 1 oder 2, wobei die Klebeschicht eine Haftkleberzusammensetzung umfasst.

4. Klebekissen nach einem der Ansprüche 1 bis 3, wobei die Klebeschicht derart vorgesehen ist, dass ein Teil der Fläche der Faserschicht im Wesentlichen frei von Klebstoff ist.

5. Klebekissen nach Anspruch 4, wobei die Klebeschicht in einem diskontinuierlichem Muster auf der Faserschicht vorgesehen ist.

6. Klebekissen nach einem der vorhergehenden Ansprüche, wobei die Klebeschicht eine Klebezusammensetzung mit leitfähigen Partikeln umfasst.

7. Klebekissen nach einem der vorhergehenden Ansprüche, wobei die Faserschicht eine Vliesschicht ist.

8. Klebekissen nach Anspruch 7, wobei die Faserschicht genadelt oder heißgeklebt ist.

9. Anordnung, umfassend ein Metallsubstrat, an dem ein Klebekissen nach einem der Ansprüche 1 bis 8 angeklebt ist, wobei das Klebekissen durch die Klebeschicht des Klebekissens an das Metallsubstrat angeklebt ist.

10. Verfahren, umfassend das Ankleben eines Klebekissens nach einem der Ansprüche 1 bis 8 an ein Metallsubstrat, Beschichten der Faserschicht des Klebekissens mit einer vernetzbaren Zusammensetzung durch galvanische Abscheidung und Herbeiführen der Vernetzung der vernetzbaren Zusammensetzung.

11. Verfahren nach Anspruch 10, wobei die vernetzbare Zusammensetzung eine Epoxid-Verbindung umfasst.

12. Verfahren nach Anspruch 10 oder 11, wobei die vernetzbare Zusammensetzung einer erhöhten Temperatur von mindestens 100°C ausgesetzt wird und dadurch die Vernetzung der vernetzbaren Zusammensetzung herbeigeführt wird.

## Revendications

1. Patin adhésif comprenant une couche fibreuse comprenant un mélange de fibres métalliques et de fibres polymères, ladite couche fibreuse ayant une épaisseur d'au moins 3 mm et ayant sur au moins l'une de ses grandes surfaces opposées une couche adhésive, ladite couche adhésive étant configurée de manière à permettre un contact électrique entre ladite couche fibreuse et un substrat métallique lorsque ledit substrat métallique est collé à ladite couche adhésive.

2. Patin adhésif selon la revendication 1, dans lequel une couche adhésive est prévue sur les deux grandes surfaces opposées de ladite couche fibreuse et dans lequel chacune desdites couches adhésives est configurée de manière à permettre un contact électrique entre ladite couche fibreuse et un substrat métallique lorsqu'un tel substrat métallique est collé à ladite couche adhésive.

3. Patin adhésif selon la revendication 1 ou 2, dans lequel ladite couche adhésive comprend une composition adhésive sensible à la pression.

4. Patin adhésif selon l'une quelconque des revendications 1 à 3, dans lequel ladite couche adhésive est prévue de telle sorte qu'une partie de la surface de ladite couche fibreuse soit substantiellement exempte d'adhésif.

5. Patin adhésif selon la revendication 4, dans lequel ladite couche adhésive est prévue suivant un motif discontinu sur ladite couche fibreuse.

6. Patin adhésif selon l'une quelconque des revendications précédentes, dans lequel ladite couche adhésive comprend une composition adhésive ayant des particules conductrices.

7. Patin adhésif selon l'une quelconque des revendications précédentes, dans lequel ladite couche fibreuse est une couche non-tissée.

8. Patin adhésif selon la revendication 7, dans lequel ladite couche fibreuse est poinçonnée à l'aiguille ou thermoscellée.

9. Ensemble comprenant un substrat métallique sur lequel est collé un patin adhésif tel que défini dans l'une quelconque des revendications 1 à 8, ledit patin adhésif étant collé audit substrat métallique par ladite couche adhésive dudit patin adhésif.

10. Procédé comprenant le collage d'un patin adhésif selon l'une quelconque des revendications 1 à 8 à un substrat métallique, le revêtement de ladite couche fibreuse dudit patin adhésif avec une composition réticulable par électrodéposition et la réticulation de ladite composition réticulable.

11. Procédé selon la revendication 10, dans lequel ladite composition réticulable comprend un composé époxy.

12. Procédé selon la revendication 10 ou 11, dans lequel ladite composition réticulable est amenée à réticuler en soumettant la composition réticulable à une température élevée d'au moins 100°C.
